(19) Europäisches Patentamt / European Patent Office / Office européen des brevets

(11) EP 2 002 995 B1

(12) # EUROPEAN PATENT SPECIFICATION

(45) Date of publication and mention of the grant of the patent:
**11.05.2011 Bulletin 2011/19**

(21) Application number: **07739331.2**

(22) Date of filing: **22.03.2007**

(51) Int Cl.:
***B60C 17/00*** *(2006.01)* ***B60C 9/00*** *(2006.01)*
***B60C 9/08*** *(2006.01)* ***B60C 9/20*** *(2006.01)*
***B60C 9/22*** *(2006.01)* ***D02G 3/48*** *(2006.01)*

(86) International application number:
**PCT/JP2007/055888**

(87) International publication number:
**WO 2007/108510 (27.09.2007 Gazette 2007/39)**

(54) **PNEUMATIC SAFETY TIRE**

LUFTSICHERHEITSREIFEN

PNEUMATIQUE DE SECURITE

(84) Designated Contracting States:
**DE ES FR GB IT**

(30) Priority: **23.03.2006 JP 2006081681**

(43) Date of publication of application:
**17.12.2008 Bulletin 2008/51**

(73) Proprietor: **Bridgestone Corporation**
**Tokyo 104-8340 (JP)**

(72) Inventor: **ZUIGYOU, Yugo**
**Kodaira-shi, Tokyo 1878531 (JP)**

(74) Representative: **Whalley, Kevin**
**Marks & Clerk LLP**
**90 Long Acre**
**London WC2E 9RA (GB)**

(56) References cited:
**WO-A1-2006/077973**
**JP-A- 2000 142 025**
**JP-A- 2001 334 807**
**JP-A- 2001 334 811**
**JP-A- 2002 307 908**
**JP-A- 2003 146 014**
**JP-A- 2004 306 658**
**JP-A- 2006 123 649**
**JP-A- 2006 321 275**
**JP-A- 2006 321 384**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 002 995 B1

## Description

### TECHNICAL FIELD

The present invention relates to a pneumatic safety tire and, more particularly, to a pneumatic safety tire exhibiting improved run flat performance by controlling the buckling deformation of the tread portion.

### BACKGROUND ART

Heretofore, as one of the run flat tires, i.e., tires which can be driven safely in some distance even under the condition of a decreased internal pressure due to puncture or the like cause, a run flat tire of the side reinforcement type, i.e., a run flat tire in which side reinforcing rubber layers having an approximately crescent sectional shape are disposed in the innermost face of the carcass at side walls of the tire, has been known. It is attempted that the amount of bending deformation in the side wall portion in the run flat tire of the side reinforcement type is decreased so that durability is improved by suppressing the temperature failure due to heat generated in the rubber in the bent portions and the structural failure such as wear and damage on the inner liner rubber disposed between the buttress portion and the bead portion.

However, problems arise in that a great increase in the volume of the rubber reinforcing layer is necessary to sufficiently decrease the amount of the bending deformation, and the weight and the cost of the tire increase, and that an excessive increase in the volume of rubber increases generation of heat in the rubber, and durability cannot be improved sufficiently.

When the tire of the side reinforcement type is driven under the run flat condition, it is known that a phenomenon called buckling, in which the central portion of the tread is lifted above the surface of the road, takes place. When the buckling takes place in a tire, the pressure of the road surface at the shoulder portions of the tread is increased, and the heat generation in the reinforcing rubber disposed closest to the shoulder portion is increased. There is the possibility that the failure of the tire takes place as the result.

To overcome the above problem, a run flat tire of the side reinforcement type which can suppress formation of the buckling during driving under the run flat condition and exhibits improved durability has been desired, and various studies are being conducted for this purpose.

For example, in Patent Reference 1, a tire in which at least one reinforcing layer comprising an arrangement of many cords placed substantially perpendicular to the plane of the equator of the tire is disposed between a belt and a belt reinforcing layer which is disposed at the outer circumference of the belt and comprises a cord of an organic fiber such as a Nylon fiber and an aramide fiber, is described. The formation of the buckling can be suppressed and durability under the run flat condition can be improved by disposing the reinforcing layer as described above. However, a problem arises in that rigidity of the entire tread portion increases due to the disposed reinforcing layer, and the ride quality under vibration decreases when impact forces are applied by the road surface during driving under the normal internal pressure.

In Patent Reference 2, a tire in which the outermost belt layer among the belt layers constituting the belt is constituted with a pair of smaller belt members disposed at the right and left sides, the two smaller belt members are disposed in a manner such that the members overlap each other at portions along the equatorial plane of the tire in the range of 20 to 50% of the width of the tread where the deformation of the tread portion is particularly great when the buckling takes place, the formation of buckling is suppressed by the above structure without increasing rigidity of the out-of-plane bending at portions other than the overlapped portions, and durability in driving under the run flat condition is improved without sacrificing the ride quality as the result, is described. However, the above tire has a problem in that the structure of the belt layer is complicated, and the production process becomes complicated.

In Patent Reference 3, it is disclosed that the bending deformation in the side wall portion described above shows a strong correlation to the buckling deformation in the tread portion, a greater amount of the buckling deformation causes an increase in the amount of bending deformation in the side wall portion, and the bending deformation can be suppressed by suppressing the buckling deformation.

It is also disclosed that, for effectively suppressing the buckling deformation in the condition of internal pressure of zero such as the condition of puncture, it is necessary that a reinforcing rubber layer having a great modulus be disposed between plies in the tread portion or between plies placed between the carcass and the belt layer in place of reinforcing the tread portion using a cord reinforcing layer.

It is mentioned that the cord reinforcing layer or the combination of the belt layer and the carcass layer described above exhibits the rigidity and, in particular, the rigidity in the circumferential direction, only when the sufficient tension is provided to the cords by application of an internal pressure and, therefore, it is difficult that an effective increase in the bending rigidity in the axial direction of the tire under the condition of internal pressure of zero is expected by a change in the material of the cord or by addition of a cord layer.

[Patent Reference 1] Japanese Patent Application Laid-Open No. Heisei 6(1994)-191243

[Patent Reference 2] Japanese Patent Application Laid-Open No. 2004-359145
[Patent Reference 3] Japanese Patent No. 3335112

DISCLOSURE OF THE INVENTION

Under the above circumstances, the present invention has an object of providing a pneumatic safety tire which can suppress buckling deformation of the tread portion and improve the run flat performance while the ride quality during driving under the normal internal pressure is not adversely affected and changes in the manufacturing process are not required.
To achieve the above object, intensive studies were made by the present inventor on the relation between the thermal contraction and the buckling deformation of a tire with attention on the fact that the temperature of a tire tread reaches as high as 100°C or higher during the driving under the run flat condition and, as the result, it was found that the stress of thermal contraction of the fiber cord constituting the belt reinforcing layer and the buckling deformation shows a strong correlation to each other even under the condition of the internal pressure of zero, and the above object could be achieved by disposing, as the belt reinforcing layer, a fiber cord exhibiting a prescribed great stress of thermal contraction as the heat was generated during driving under the run flat condition. The present invention has been completed based on the knowledge.
The present invention provides:

(1) A pneumatic safety tire which comprises side walls connected to both end portions of a cylindrical crown portion in a radially inner direction and having tip portions each having a bead core embedded therein, a carcass layer which comprises at least one sheet of a radial ply of a fiber cord in a portion extending from one of the side walls to an other of the side walls through the crown portion and end portions each wound up around the bead core in an axially outer direction and fixed, a plurality of belt layers, belt reinforcing layers and a tread portion which are successively disposed at an outer circumference of the crown portion of the carcass layer for reinforcement, and reinforcing rubber layers having an approximately crescent sectional shape which are disposed on an inner circumferential face of the carcass layers at the side walls and support a portion of a load, wherein a fiber cord constituting the belt reinforcing layer has a size of 1,000 to 7,000 dtex as an entire cord, comprises at least 50% by mass of a polyketone fiber and exhibits a maximum stress of thermal contraction of 0.1 to 1.8 cN/dtex;
(2) A pneumatic safety tire described in (1), wherein a material fiber of the polyketone fiber in the fiber cord constituting the belt reinforcing layer has a tensile strength of 10 cN/dtex or greater, a modulus of 200 cN/dtex or greater and, after being treated with an adhesive (a dipping treatment), a degree of thermal contraction of 1 to 5% in a dry heat treatment at 150°C for 30 minutes;
(3) A pneumatic safety tire described in any one of (1) and (2), wherein a coefficient of final twist R of the fiber cord constituting the belt reinforcing layer is in a range of 0.4 to 0.95, the coefficient of final twist R being provided by following equation (I):

$$R=N\times(0.125\times D/\rho)^{1/2}\times10^{-3} \qquad \cdots \text{(I)}$$

wherein N represents a number of twist of the cord (/10 cm), D represents a decitex value of an entire cord, and ρ represents density of the cord;
(4) A pneumatic safety tire described in (1), wherein the fiber cord constituting the carcass layer comprises a cord which comprises at least 50% by mass of a polyketone fiber and exhibits a maximum stress of thermal contraction in a range of 0.1 to 1.8 cN/dtex;
(5) A pneumatic safety tire described in (5), wherein a material fiber of the polyketone fiber in the fiber cord constituting the carcass layer has a tensile strength of 10 cN/dtex or greater, a modulus of 200 cN/dtex or greater and, after being treated with an adhesive (a dipping treatment), a degree of thermal contraction of 1 to 5% in a dry heat treatment at 150°C for 30 minutes;
(6) A pneumatic safety tire described in any one of (1) to (5), wherein the wound up end portions of at least one layer in the carcass layer are each disposed in a manner such that a portion of the wound up end portion overlaps an end portion of the belt layer;
(7) A pneumatic safety tire described in (6), wherein a width of the portion of the wound up end portion overlapping an end portion of the belt layer is 10 to 30 mm;
(8) A pneumatic safety tire described in any one of (1) to (7), wherein a polyketone constituting the polyketone fiber substantially comprises a repeating unit represented by following general formula (II):

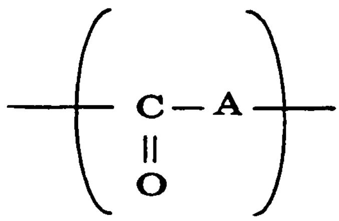

... (II)

wherein A represents a portion derived from an unsaturated compound polymerized at an unsaturated bond, which may be same with or different from each other among repeating units; and
(9) A pneumatic safety tire described in (8), wherein A in general formula (II) represents ethylene group.

## BRIEF DESCRIPTION OF THE DRAWINGS

Figure 1 shows a diagram exhibiting the left side portion of a section cut in the transverse direction of an embodiment of the pneumatic safety tire of the present invention.

In the Figure, reference numerals mean as follows:

1: A tire
2: A bead portion
3: A side wall portion
4: A tread portion
5: A bead core
6: A carcass layer
7: A reinforcing layer having an approximately crescent sectional shape
8: A belt
9: A first belt layer
10: A third belt layer
11: A bead filler
12: A rim guard

## THE MOST PREFERRED EMBODIMENT TO CARRY OUT THE INVENTION

It is necessary that the fiber cord constituting the belt reinforcing layer in the safety tire of the present invention have a size of 1,000 to 7,000 dtex as the entire cord, comprise at least 50% by mass of a polyketone fiber and exhibit a maximum stress of thermal contraction of 0.1 to 1.8 cN/dtex.
In the present invention, the cord constituting the belt reinforcing layer is constituted with a cord in which at least 50% by mass of the fiber is a polyketone fiber. The cord exhibits excellent property of thermal contraction, strength, dimensional stability, heat resistance and adhesion with rubber. For exhibiting the above excellent properties, it is necessary that at least 50% by mass of the fiber constituting the cord be a polyketone fiber. It is preferable that at least 75% by mass, more preferably at least 90% by mass and most preferably 100% by mass of the fiber constituting the cord is a polyketone fiber.
It is necessary that the fiber cord constituting the belt reinforcing layer have a size of 1,000 to 7,000 dtex as the entire cord. It is preferable that the size is 2,200 to 4,200 dtex as the entire cord. When the size as the entire cord is adjusted in the above range, the decrease in the ride quality during driving under the normal internal pressure can be suppressed, and the effect of suppressing the buckling during driving under the run flat condition can be obtained.
In general, a cord can be prepared by twisting filaments. The number of the bundle of the filaments used for the twisting is not particularly limited. A double twisted cord or a triple twisted cord obtained by twisting two or three bundles, respectively, of filaments having a size of 500 to 3,000 dtex is preferable.
For example, the bundle of filaments described above is treated by the primary twisting. Two or three bundles of the primary twists thus obtained are combined and treated by the final twisting in the opposite direction, and a twisted cord can be obtained.
For example, as the cord used for the belt reinforcing layer, cords such as 1,670 dtex/2 (the size of the entire

cord: 3,340 dtex) and 1,100 dtex/2 (the size of the entire cord: 2,200 dtex) are preferable.

In the present invention, it is necessary that the cord used for the belt reinforcing layer comprise at least 50% by mass of a polyketone fiber, and the maximum stress of thermal contraction of the cord be in the range of 0.1 to 1.8 cN/dtex. It is preferable that the maximum stress of thermal contraction is in the range of 0.4 to 1.6 cN/dtex and more preferably in the range of 0.4 to 1.0 cN/dtex. When the maximum stress of thermal contraction is adjusted in the above range, the decrease in the efficiency of regular arrangement of the carcass cords due to heating during the production of a tire can be suppressed so that the sufficient strength of a tire can be surely achieved, and marked contraction of the carcass cords is suppressed so that a tire having a stable shape can be obtained.

In the present invention, it is preferable that the stress of thermal contraction of the cord comprising at least 50% by mass of a polyketone fiber which constitutes the belt reinforcing layer can be repeatedly exhibited reversibly in accordance with the temperature of the tire.

The stress of thermal contraction of the cord comprising at least 50% by mass of a polyketone fiber which is used in the present invention is rapidly increased at a temperature exceeding 110°C. In other words, the stress of thermal contraction is increased as the temperature of the tire is elevated.

When the temperature of the tire is elevated due to the driving under the run flat condition, the polyketone fiber in the belt reinforcing layer exhibits a great stress of thermal contraction, and the rigidity of the entire tread portion is increased. Thereby, formation of the buckling phenomenon in the tire is suppressed and, as the result, the durability of the tire in driving under the run flat condition is improved. The temperature is occasionally elevated at 200°C or higher during driving under the run flat condition.

When the temperature is low, i.e., during driving under the normal internal pressure, the polyketone fiber exhibits almost no stress of thermal contraction, and almost no increase in the rigidity takes place. Therefore, the vertical spring constant of the tire shows almost no increase during the driving under the normal internal pressure and, in general, the ride quality during the driving under the normal internal pressure is not adversely affected.

The contraction of the cord of the polyketone fiber is released to restore the original condition when the cord is cooled at the room temperature, and the contraction takes place again when the temperature is elevated. This phenomenon takes place repeatedly in every driving of the tire.

It is preferable that the polyketone constituting the polyketone fiber substantially comprises a repeating unit represented by the following general formula (II):

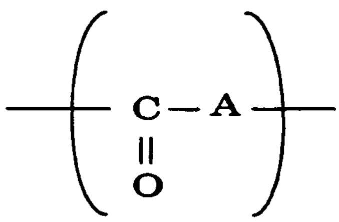

··· (II)

wherein A represents a portion derived from an unsaturated compound polymerized at an unsaturated bond, which may be the same with or different from each other among repeating units.

As the polyketone used as the raw material for the cord of the polyketone fiber used in the present invention, polyketones substantially comprising the repeating unit represented by the above general formula (II) are preferable. Among the above polyketones, polyketones in which 97% by mole or more of the repeating unit is 1-oxotrimethylene [-$CH_2$-$CH_2$-CO-] are preferable, polyketones in which 99% by mole or more of the repeating unit is 1-oxotrimethylene are more preferable, and the polyketone in which 100% by mole of the repeating unit is 1-oxotrimethylene is most preferable. When the content of 1-oxotrimethylene is greater, the regularity of the molecular chain is enhanced, and a more highly crystalline and highly oriented fiber can be obtained.

In the polyketone as the raw material of the cord of the polyketone fiber, it is preferable that the content of the portion in which the portion derived from the unsaturated compound and the portion of the ketone are alternately arranged is 90% by mass or greater, more preferably 97% by mass or greater and most preferably 100% although a plurality of the portions of the ketone may be bonded to each other and a plurality of the portions derived from the unsaturated compound may be bonded to each other.

As the unsaturated compound forming the portion represented by A in the above general formula (II), ethylene is most preferable. However, the unsaturated compound may be an unsaturated hydrocarbon other than ethylene such as propylene, butene, pentene, cyclopentene, hexene, cyclohexene, heptene, octene, nonene, decene, dodecene, styrene, acetylene and allene or a compound having an unsaturated bond such as methyl acrylate, vinyl acetate, acrylamide, hydroxyethyl methacrylate, undecenoic acid, undecenol, 6-chlorohexene, N-vinylpyrrolidone, diesters of sulnylphosphonic acid, sodium styrenesulfonate, sodium allylsulfonate, vinylpyrrolidone and vinyl chloride.

As the process for forming a fiber from the polyketone obtained in accordance with a conventional process, (1) a process in which, after an undrawn fiber is obtained by spinning, the multi-stage heat drawing is conducted, wherein the drawing is conducted at a prescribed temperature and a prescribed draw ratio in the final drawing stage in the multi-stage drawing, and (2) a process in which, after an undrawn fiber is obtained by spinning, the heat drawing is conducted, and the fiber is quenched after the heat drawing is completed while a great tension is applied to the fiber, are preferable. The desired filament advantageously used for preparing the cord of the polyketone fiber described above can be obtained by forming the fiber from the polyketone in accordance with process (1) or process (2).

The process for obtaining the undrawn fiber of the polyketone described above by spinning is not particularly limited, and a conventional process can be used. Specifically, wet spinning processes using an organic solvent such as hexafluoroisopropanol and m-cresol, such as processes described in Japanese Patent Application Laid-Open Nos. Heisei 2(1990)-112413 and Heisei 4(1992)-228613 and Japanese Patent Application (as a national phase under PCT) Laid-Open No. Heisei 505344, and the wet spinning processes using an aqueous solution of a zinc salt, a calcium salt, a salt of thiocyanic acid or an iron salt, such as processes described in International Patent Application Laid-Open Nos. 99/18143 and 00/09611 and Japanese Patent Application Laid-Open Nos. 2001-164422, 2004-218189 and 2004-285221, are preferable.

As the process for drawing the obtained undrawn fiber, the heat drawing process in which the undrawn fiber is heated at a temperature higher than the glass transition temperature of the undrawn fiber and drawn, is preferable. In process (2) described above, it is preferable that the drawing of the undrawn fiber is conducted in a plurality of stages although the drawing may be conducted in a single stage.

The process for heat drawing is not particularly limited. For example, the process in which the fiber is made run on a heated roll or an overheated plate, may be used. It is preferable that the temperature of the heat drawing is in the range of 110°C to the melting point of the polyketone, and the draw ratio in the entire stages is 10 or greater.

When the polyketone fiber is formed in accordance with process (1) described above, it is preferable that the temperature in the final drawing stage in the multi-stage heat drawing described above is in the range of 110°C to (the temperature of drawing in the drawing stage immediately before the final drawing stage - 3°C). It is preferable that the draw ratio in the final drawing stage in the multi-stage heat drawing described above is. When the polyketone fiber is formed in accordance with process (2) described above, it is preferable that the tension applied to the fiber after the heat drawing has been completed is in the range of 0.5 to 4 cN/dtex, the rate of cooling in the quenching is 30°C/second or greater, and the temperature is 50°C or lower when the cooling is completed in the quenching.

The process for quenching the polyketone fiber obtained after the heat drawing is not particularly limited, and a conventional process can be used. Specifically, the process using rolls for the cooling is preferable. Since the polyketone fiber obtained as described above has a great amount of residual elastic strain, in general, it is preferable that a heat treatment for relaxation is conducted so that the length of the fiber is decreased from the length of the fiber after the heat drawing. It is preferable that the temperature of the heat treatment for relaxation is in the range of 50 to 100°C, and the ratio of the length after the relaxation to the length before the relaxation (the relaxation ratio) is in the range of 0.980 to 0.999.

It is preferable that the polyketone fiber has a crystal structure such that the crystallinity is 50 to 90% and the degree of orientation of crystals is 95% or greater. When the crystallinity is smaller than 50%, the formation of the structure of the fiber is insufficient, and the sufficient strength is not obtained. Moreover, there is the possibility that the property of contraction and the dimensional stability at high temperatures become unstable. Therefore, it is preferable that the crystallinity is 50 to 90% and more preferably 60 to 85%.

The cord can be prepared by twisting filaments. The number of the bundle of filaments used for the twist is not particularly limited. In general, a cord prepared by twisting two or three bundles of filaments is used. A double twist cord and a triple twist cord obtained by twisting two bundles of filaments are preferable. For example, a cord of twisted fibers can be obtained in a manner such that the bundle of filaments described above is treated by the primary twist, and two bundles of filaments treated above are combined and treated by the final twist in the direction opposite to the direction of the primary twist.

It is preferable that the coefficient of final twist R of the fiber cord constituting the belt reinforcing layer described above is in the range of 0.4 to 0.95 and more preferably 0.55 to 0.85. The coefficient of final twist R is provided by following equation (I):

$$R = N \times (0.125 \times D/\rho)^{1/2} \times 10^{-3} \quad \cdots \text{(I)}$$

wherein N represents the number of twist of the cord (/10 cm), D represents the decitex value of the entire cord, and ρ

represents the density of the cord. When the coefficient of final twist is adjusted in the above range, the formation of buckling in the driving under the run flat condition can be suppressed, and the disorder in the arrangement of cords and the decrease in the uniformity of the tire due to the decrease in the properties of the cord can be suppressed.

A cord/rubber composite used for the belt reinforcing layer described above can be obtained by coating the cord of the polyketone fiber obtained as described above with rubber. The rubber used for coating the cord of the polyketone fiber is not particularly limited. A coating rubber conventionally used for belts and carcass reinforcing layers can be used. It is preferable that a belt coating rubber is used for the belt reinforcement rubber. The cord of the polyketone fiber may be treated with an adhesive before the cord of the polyketone fiber is coated with the rubber so that adhesion with the coating rubber is improved.

The stress of thermal contraction exhibited by the cord of the polyketone fiber obtained as described above is about 4 times the stress of thermal contraction exhibited by Nylon 66 and almost 10 times the stress of thermal contraction exhibited by polyethylene terephthalate.

To utilized the excellent property of thermal contraction of the polyketone fiber most effectively, it is preferable that the temperature of the treatment during working and the temperature of the product during the use are close to the temperature showing the maximum stress of thermal contraction (referred to as the temperature of the maximum thermal contraction, hereinafter).

When the cord of the polyketone fiber is used as a fiber material for reinforcing rubber such as a tire cord and a belt, it is preferable that the temperature of the maximum thermal contraction is in the range of 100 to 250°C and preferably in the range of 150 to 240°C since the temperature of working such as the temperature of the RFL treatment and the temperature of vulcanization is 100 to 250°C, and the temperature of a material such as a material in a tire and a belt reaches 100 to 200°C when the temperature is elevated by heat generation due to repeated use or rotation at a high speed.

Examples of the carcass cord used for the fabric described above include (a) cords comprising the polyketone fiber alone and (b) cords obtained by mixed twist or alternate twist of the polyketone fiber and a fiber other than the polyketone fiber. It is preferable that the cord described above comprises at least 50% by mass of the polyketone fiber in a single cord. The polyketone fiber is used in the carcass cord in an amount of at least 50% by mass, preferably at least 75% by mass, more preferably at least 90% by mass and most preferably 100% by mass.

When the content of the polyketone fiber is adjusted in the above range, the excellent property of thermal contraction, strength, dimensional stability, heat resistance and adhesion with rubber of the cord can be obtained.

The fiber other than the polyketone fiber is not particularly limited as long as the content of the fiber is smaller than 50%. A conventional fiber such as a polyamide fiber, a polyester fiber, a rayon fiber and an aramide fiber can be used in accordance with the application and the object. When the content of the fiber other than the polyketone fiber exceeds 50% by mass, the strength and the dimensional stability decrease in the case of a cord comprising a polyester fiber or a polyamide fiber, the strength decreases markedly in the case of a warp comprising a rayon fiber, and the adhesion with rubber decreases markedly in the case of a warp comprising an aramide fiber.

In the pneumatic safety tire of the present invention, it is preferable that the material fiber of the polyketone fiber in the cord constituting the belt reinforcing layer described above has a tensile strength of 10 cN/dtex or greater and more preferably 15 cN/dtex or greater. When the tensile strength is adjusted in the above range, the sufficient strength of the tire can be surely obtained. The upper limit of the tensile strength is not particularly limited. The upper limit is, in general, about 18 cN/dtex.

It is preferable that the material fiber of the polyketone fiber described above has a modulus of 200 cN/dtex or greater and more preferably 250 cN/dtex or greater. When the modulus is adjusted in the above range, the sufficient property for maintaining the shape of a tire can be surely obtained. The upper limit of the modulus is not particularly limited. The upper limit is, in general, about 350 cN/dtex.

For the cord constituting the belt reinforcing layer comprising at least 50% by mass of the polyketone fiber described above which has been treated with an adhesive (the dipping treatment), it is preferable that the degree of thermal contraction is in the range of 1 to 5% and more preferably in the range of 2 to 4% in the dry heat treatment at 150°C for 30 minutes. When the degree of thermal contraction is adjusted in the above range, the excellent efficiency of regular arrangement of cords under heating during the production of a tire and the excellent strength of the tire are surely obtained, and a stable shape of the tire can be obtained.

The fiber cord constituting the carcass layer of the pneumatic safety tire of the present invention is not particularly limited. For example, fibers of Nylon, polyester, rayon and polyketone can be used. Similarly to the fiber cord used for the belt reinforcing layer, it is preferable that a fiber cord comprising at least 50% by mass of the polyketone fiber and exhibiting the maximum stress of thermal contraction in the range of 0.1 to 1.8 cN/dtex is used.

When the cord comprising at least 50% by mass of the polyketone fiber is applied to both of the belt reinforcing layer and the carcass cord, the stress of thermal contraction of the cord in the belt reinforcing layer and the stress of thermal contraction of the cord in the carcass cord are efficiently utilized. Due to the interaction of these stresses, the buckling deformation of the tread portion can be further suppressed, and the property for driving under the run flat

condition can be improved in comparison with the case in which the cord is applied to the belt reinforcing layer alone.

The polyketone fiber is used in the carcass cord in an amount of at least 50% by mass, preferably at least 75% by mass, more preferably at least 90% by mass and most preferably 100% by mass.

When the amount of the polyketone fiber is adjusted in the above range, the excellent property for thermal contraction, strength, dimensional stability, heat resistance and adhesion with rubber of the cord can be obtained.

It is preferable that the maximum stress of thermal contraction of the carcass cord described above is in the range of 0.1 to 1.8 cN/dtex, more preferably in the range of 0.4 to 1.6 cN/dtex and most preferably in the range of 0.4 to 1.0 cN/dtex. When the maximum stress of thermal contraction is adjusted in the above range, the decrease in the efficiency of regular arrangement of carcass cords under heating during production of a tire can be suppressed, and the excellent strength of the tire can be surely obtained. At the same time, marked contraction of the carcass cord can be suppressed, and a tire having a stable shape can be obtained.

It is preferable that the material fiber of the polyketone fiber in the fiber cord constituting the carcass layer has a tensile strength of 10 cN/dtex or greater, a modulus of 200 cN/dtex or greater and, after being treated with an adhesive (the dipping treatment), a degree of thermal contraction in the range of 1 to 5% in the dry heat treatment at 150°C for 30 minutes.

It is preferable that the material fiber of the polyketone fiber described above has a tensile strength of 10 cN/dtex or greater and more preferably 15 cN/dtex or greater. When the tensile strength is adjusted in the above range, the sufficient strength of the tire can be surely obtained. The upper limit of the tensile strength is not particularly limited. In general, the upper limit is about 18 cN/dtex.

It is preferable that the material fiber of the polyketone fiber described above has a modulus of 200 cN/dtex or greater and more preferably 250 cN/dtex or greater. When the modulus is adjusted in the above range, the sufficient property for maintaining the shape of a tire can be surely obtained. At the same time, the effect of suppressing the buckling during driving under the run flat condition can be obtained. The upper limit of the modulus is not particularly limited. The upper limit is, in general, about 350 cN/dtex.

For the cord comprising at least 50% by mass of the polyketone described above which has been treated with an adhesive (the dipping treatment), it is preferable that the degree of thermal contraction is in the range of 1 to 5% and more preferably in the range of 2 to 4% in the dry heat treatment at 150°C for 30 minutes. When the degree of thermal contraction is adjusted in the above range, the excellent efficiency of regular arrangement of cords under heating during the production of a tire and the excellent strength of the tire are surely obtained, and a stable shape of the tire can be obtained.

It is preferable that, in the pneumatic safety tire of the present invention, the wound up end portions of at least one layer in the carcass layer are each disposed in a manner such that a portion of the wound up end portion overlaps an end portion of the belt layer. When the portion overlapping an end portion of the belt layer is formed, the degree of utilization of the stress of thermal contraction of the cord can be increased in the application of the fiber cord comprising at least 50% by mass of the polyketone fiber to the carcass cord.

It is preferable that the width of the portion of the wound up end portion overlapping an end portion of the belt layer is 10 to 30 mm. When the width of the overlapped portion is adjusted in the above range, the decrease in the uniformity is suppressed, and the degree of utilization of the stress of thermal contraction of the carcass cord can be efficiently increased.

In the following, the present invention will be described more specifically with reference to a figure. Figure 1 shows a diagram exhibiting the left side portion of a section cut in the transverse direction of an embodiment of the pneumatic safety tire of the present invention.

A tire 1 shown in Figure 1 comprises a pair of bead portions 2 at the right and left sides; a pair of side wall portions 3, a tread portion 4 connected to the side wall portions 3; a carcass layer 6 which is disposed extending in a toroidal shape between bead cores 5 each embedded in the bead portion 2 and comprises at least one carcass ply reinforcing the above portions 2, 3, and 4; a pair of reinforcing rubber layers having approximately crescent sectional shape 7 disposed at the inside of the carcass layers 6 at the side wall portions 3; a belt 8 disposed at the inside of the tread 4 and comprising at least two belt layers; and at least one belt reinforcing layer 9 disposed at the outside of the belt 8 in the radial direction of the tire. In the embodiment shown in Figure 1, the belt reinforcing layer 9 is composed of a first belt reinforcing layer 9 disposed in a manner such that the entire belt 8 is covered and a pair of second belt reinforcing layers 10 disposed at the outside of the first belt reinforcing layer 9 in the radial direction of the tire in a manner such that each end portion of the belt 8 in the transverse direction is covered. The mark 11 means a bead filler, and the mark 12 means a rim guard.

The carcass layer 6 shown in the figure is composed of a single carcass ply. In the carcass layer 6, the main portion is disposed extending between the pair of bead cores 5 in the toroidal shape, and the end portions of the portions wound up around the bead cores 5 to the outside in the radial direction from the inside to the outside in the transverse direction of the tire have portions overlapping the end portions of the belt 8. However, the number of the ply and the structure of the carcass layer in the pneumatic safety tire of the present invention are not limited to those described above.

The belt layers constituting the belt 8 shown in the figure is each, in general, made of a layer of a cord coated with rubber and, preferably a layer of a steel cord coated with rubber, which extends in a direction inclined with respect to the equatorial plane, and the two belt layers are laminated to each other in a manner such that the direction of the cord constituting one of the belt layers and the direction of the cord constituting the other belt layer are opposite to each other with respect to the equatorial plane and intersect each other. The belt 8 shown in the figure comprises two belt layers. However, the number of the belt layer constituting the belt 8 may be three or greater in the pneumatic safety tire of the present invention.

In the pneumatic safety tire of the present invention, the first belt reinforcing layer 9 comprises a layer of a cord coated with rubber which is arranged in the direction substantially parallel to the circumferential direction of the tire, and the fiber cord described above comprising at least 50% by mass of the polyketone fiber and exhibiting a great maximum stress of thermal contraction is applied to the first belt reinforcing layer. It is preferable that the width of the first belt reinforcing layer is in the range of 95 to 105% of the width of the belt 8.

The pneumatic safety tire of the present invention has a sheet of the second belt reinforcing layer 10 disposed at the outside of the belt 8 in the radial direction of the tire in a manner such that the outside end portions of the belt 8 in the transverse direction are covered. However, it is not essential that the second belt layer 10 is disposed. The second belt layer 10 comprises a layer of a cord coated with rubber which is arranged in the direction substantially parallel to the circumferential direction of the tire similarly to that of the first belt layer 9. The material of the cord is not particularly limited. Examples of the material include steel and organic fibers of Nylon, polyester, aramide and polyketone. It is preferable that the fiber cord described above comprising at least 50% by mass of the polyketone fiber and exhibiting a great maximum stress of thermal contraction is applied to the cord constituting the second belt reinforcing layer 10 since greater durability in driving under the run flat condition is obtained.

It is preferable that the width of the second belt reinforcing layer 10 is such that a portion of 20 mm or wider extends outside the end of the belt so that the effect of enhancing the durability in driving under the run flat condition is surely obtained. Alternatively, the width of the second belt reinforcing layer may be approximately the same as the width of the first belt 9.

## EXAMPLES

The present invention will be described more specifically with reference to examples in the following. However, the present invention is not limited to the examples. Various measurements were conducted in accordance with the following methods.

<Evaluation of physical properties of a cord>

1. Tensile strength and tensile modulus

The tensile strength and the tensile modulus were measured in accordance with the methods of Japanese Industrial Standard L-1013. As the tensile modulus, the initial modulus calculated based on the stress at an elongation of 0.1% and the stress at an elongation of 0.2% was used.

2. Degree of dry thermal contraction

The dry heat treatment was conducted in an oven at 150°C for 30 minutes. The length of a fiber was measured under a load of 1/30 (cN/dtex) before and after the heat treatment, and the degree of dry thermal contraction was obtained in accordance with the following equation:

$$\text{Degree of dry thermal contraction (\%)} = (Lb - La)/Lb \times 100$$

wherein Lb represents the length of the fiber before the heat treatment, and La represents the length of the fiber after the heat treatment.

3. Maximum stress of thermal contraction

A fiber cord of a polyketone which had been treated with an adhesive (the dipping treatment) and was not vulcanized was fixed at a length of 25 cm. The sample thus prepared was heated while the temperature was elevated at a rate of 5°C/minute, and the stress formed on the cord was measured. The maximum stress found in the obtained

temperature-stress curve was used as the maximum stress of thermal contraction.

<Evaluation of properties of a tire>

1. Durability test under the run flat condition

A tire for the test was mounted to a rim of 16x×71/2JJ, attached to the right front wheel of an FR automobile under the condition of an internal pressure of 0 kgf/cm$^2$ and was driven at a speed of 80 km/hour. The distance (km) driven before the failure of the tire took place was measured and compared. The load applied to the tire during the driving was 585 kg.

<Preparation of a polyketone fiber>

A polyketone polymer which was prepared by the complete alternating copolymerization of ethylene and carbon dioxide in accordance with a conventional process and had an intrinsic viscosity of 5.3 was added to an aqueous solution containing 65% by weight of zinc chloride and 10% weight of sodium chloride. The polymer was dissolved by stirring at 80°C for 2 hours, and a dope having a concentration of a polymer of 8% by mass was obtained.

The dope was heated at 80° and filtered through a sintered filter of 20 μm. The filtered dope was extruded from a spinning nozzle having 50 holes having a diameter of 0.10 mmϕ and kept at 80°C, via an air gap of 10 mm, into water containing 5% by weight of zinc chloride and kept at 18°C at a rate of extrusion of 2.5 cc/minute, and coagulated filaments were obtained while the filaments were drawn at a speed of 3.2 m/minute.

The coagulated filaments were then washed with an aqueous solution of sulfuric acid having a concentration of 2% by weight at a temperature of 25°C and washed with water at 30°C, and a coagulated fiber thus obtained was wound at a speed of 3.2 m/minute.

The coagulated fiber obtained above was impregnated with IRGANOX 1098 (manufactured by CIBA SPECIALTY CHEMICALS Company) and IRGANOX1076 (manufactured by CIBA SPECIALTY CHEMICALS Company) each in a concentration of 0.05% by weight based on the amount of the polyketone. The resultant coagulated fiber was dried at 240°C and treated with a finishing agent, and an undrawn fiber was obtained.

As the finishing agent, an agent having a composition of oleic acid lauryl ester / bisoxyethylbisphenol A / a polyether (propylene oxide / ethylene oxide = 35:65; the molecular weight: 20,000) / oleyl ether added with 10 moles of polyethylene oxide / castor oil ether added with 10 moles of polyethylene oxide / sodium stearylsulfonate / sodium dioctylphosphate in relative amounts (% by mass) of 30/30/10/5/23/1/1 was used.

The obtained undrawn fiber was drawn in five stages. Specifically, after being drawn successively at 240°C in the first stage, at 258°C in the second stage, at 268°C in the third stage and at 272°C in the fourth stage, the fiber was then drawn at 200°C in the fifth stage to a length 1.08 times the length after the fourth stage (the tensile force of drawing: 1.8 cN/dtex), and the drawn fiber was wound by a winding machine. The draw ratio in the entire stages from drawing the undrawn fiber to the drawing in the fifth stage was 17.1.

The obtained fiber had physical properties as excellent as a strength of 15.6 cN/dtex, an elongation of 4.2% and a modulus of 347 cN/dtex.

<Preparation of test tires>

As the polyketone fiber, the polyketone fiber prepared above was used. As other materials, the materials shown in Table 1 were used. Test tires (the tire size: 225/60R16) each having the one-ply structure were prepared, and the durability under the run flat condition was measured. The results of the test are shown in Table 1.

Example of Conventional Technology

A fiber cord of 66 Nylon (1400 dtex/2) exhibiting a maximum stress of thermal contraction of 0.08 cN/dtex was applied to the first belt reinforcing layer, and a fiber cord of rayon (1840 dtex/3) was applied to the carcass.

Examples 1 to 3

A fiber cord of the polyketone (1670 dtex/2) exhibiting a maximum stress of thermal contraction of 0.91 cN/dtex was applied to the first belt reinforcing layer, and a fiber cord of rayon (1840 dtex/3) was applied to the carcass.

Example 4 to 6

A fiber cord of the polyketone (1100 dtex/2) exhibiting a maximum stress of thermal contraction of 0.93 cN/dtex was applied to the first belt reinforcing layer, and a fiber cord of the polyketone (1670 dtex/2) exhibiting a maximum stress of thermal contraction of 0.91 cN/dtex was applied to the carcass.

Comparative Example 1

A fiber cord of the polyketone (940 dtex/1) exhibiting a maximum stress of thermal contraction of 0.90 cN/dtex was applied to the first belt reinforcing layer, and a fiber cord of rayon (1840 dtex/3) was applied to the carcass.

Comparative Example 2

A fiber cord of the polyketone (3340 dtex/3) exhibiting a maximum stress of thermal contraction of 0.90 cN/dtex was applied to the first belt reinforcing layer, and a fiber cord of rayon (1840 dtex/3) was applied to the carcass.

Comparative Example 3

A mixed twist cord comprising the polyketone fiber (37% by mass) and a fiber cord of 66 Nylon (63% by mass) (PK: 1670/dtex; 66 Nylon: 1400 dtex/2) exhibiting a maximum stress of thermal contraction of 0.08 cN/dtex was applied to the first belt reinforcing layer, and a fiber cord of rayon (1840 dtex/3) was applied to the carcass.

Table 1-1

| | | | | | |
|---|---|---|---|---|---|
| Example | | 1 | 2 | 3 | 4 |
| Comparative Example | CT* | | | | |
| Cord of belt reinforcing layer | | | | | |
| material | 66NY 100% | PK*1 100% | PK 100% | PK 100% | PK 100% |
| size | 1400 dtex/2 | 1670 dtex/2 | 1670 dtex/2 | 1670 dtex/2 | 1100 dtex/2 |
| maximum stress of thermal contraction, cN/dtex | 0.08 | 0.91 | 0.91 | 0.91 | 0.93 |
| coefficient of final twist R | 0.46 | 0.46 | 0.70 | 0.94 | 0.48 |
| Carcass cord material | Rayon 100% | Rayon 100% | Rayon 100% | Rayon 100% | PK 100% |
| size | 1840 dtex/3 | 1840 dtex/3 | 1840 dtex/3 | 1840 dtex/3 | 1670 dtex/2 |
| maximum stress of thermal contraction, cN/dtex | 0 | 0 | 0 | 0 | 0.91 |
| Weight of tire (index) | 100 | 100 | 100 | 100 | 98 |
| Durability under run flat condition (km) | 80 | 80 | 140 | 130 | 160 |

Table 1-2

| | | | | | |
|---|---|---|---|---|---|
| Example | 5 | 6 | | | |
| Comparative Example | | | 1 | 2*2 | 3 |
| Cord of belt reinforcing layer | | | | | |
| material | PK 100% | PK 100% | PK 100% | PK 100% | PK 37% 66NY 63% |
| size | 1100 dtex/2 | 1100 dtex/2 | 940 dtex/1 | 3340 dtex/3 | PK 1670 dtex/1 66NY 1400 dtex/2 |
| maximum stress of thermal contraction, cN/dtex | 0.93 | 0.93 | 0.90 | 0.90 | 0.08 |

(continued)

| Example | 5 | 6 | | | |
|---|---|---|---|---|---|
| Comparative Example | | | 1 | 2*2 | 3 |
| coefficient of final twist R | 0.65 | 0.90 | 0.65 | 0.70 | 0.50 |
| Carcass cord material | PK 100% | PK 100% | Rayon 100% | Rayon 100% | Rayon 100% |
| size | 1670 dtex/2 | 1670 dtex/2 | 1840 dtex/3 | 1840 dtex/3 | 1840 dtex/3 |
| maximum stress of thermal contraction, cN/dtex | 0.91 | 0.91 | 0 | 0 | 0 |
| Weight of tire (index) | 98 | 98 | 97 | 103 | 106 |
| Durability under run flat condition (km) | 190 | 180 | 60 | 90 | 60 |

Notes
* Example of Conventional Technology
*1 PK: polyketone fiber
*2 Ride quality under the condition of the normal internal pressure was inferior to that of the tire of Example of Conventional Technology

As clearly shown in Table 1, the tires of Example 1 to 6 of the present invention showed more excellent durabilities under the run flat condition than those shown by the tire of Examples of Conventional Technology, the tire of Comparative Example 1 in which the size of the entire cord of the polyketone fiber used for the belt reinforcing layer was small and the tire of Comparative Example 3 in which the mixed twist cord exhibiting a smaller maximum stress of thermal contraction was used for the belt reinforcing layer. The tires of Examples 4 to 6 in which the cord of the polyketone fiber exhibiting a great maximum stress of thermal contraction was used also for the carcass cord exhibited remarkably improved durability under the run flat condition due to the synergistic effect. The tire of Comparative Example 2 showed inferior ride quality under the condition of the normal internal pressure since the size of the entire cord of the polyketone fiber used for the belt reinforcing layer was as great as 10,020 dtex, causing not only the increase in the weight of the tire but also the excessive thickness of the belt reinforcing layer although the durability under the run flat condition was improved in comparison with that of the tire of Example of Conventional Technology.
It is also shown that the effect of the coefficient of the final twist of the cord of the belt reinforcing layer on the improvement in the durability under the run flat condition was great.

INDUSTRIAL APPLICABILITY

In accordance with the present invention, the pneumatic safety tire which can suppress buckling deformation of the tread portion and improve the run flat performance while the ride quality during driving under the normal internal pressure is not adversely affected and changes in the manufacturing process are not required, can be provided.
In particular, the present invention can be advantageously applied to the pneumatic safety tire of the side reinforcement type.

## Claims

**1.** A pneumatic safety tire (1) which comprises side walls (3) connected to both end portions of a cylindrical crown portion (4) in a radially inner direction and having tip portions each having a bead core (5) embedded therein, a carcass layer (6) which comprises at least one sheet of a radial ply of a fiber cord in a portion extending from one of the side walls to an other of the side walls through the crown portion, and end portions each wound up around the bead core in an axially outer direction and fixed, a plurality of belt layers (8), belt reinforcing layers (9, 10) and a tread portion (4) which are successively disposed at an outer circumference of the crown portion of the carcass layer for reinforcement, and reinforcing rubber layers (7) having an approximately crescent sectional shape which are disposed on an inner circumferential face of the carcass layers at the side walls and support a portion of a load, **characterized in that** a fiber cord constituting the belt reinforcing layer (9, 10) has a size of 1,000 to 7,000 dtex as an entire cord, comprises at least 50% by mass of a polyketone fiber and exhibits a maximum stress of thermal contraction of 0.1 to 1.8 cN/dtex.

2. A pneumatic safety tire according to Claim 1, wherein a material fiber of the polyketone fiber in the fiber cord constituting the belt reinforcing layer has a tensile strength of 10 cN/dtex or greater, a modulus of 200 cN/dtex or greater and, after being treated with an adhesive (a dipping treatment), a degree of thermal contraction of 1 to 5% in a dry heat treatment at 150°C for 30 minutes.

3. A pneumatic safety tire according to any one of Claims 1 and 2, wherein a coefficient of final twist R of the fiber cord constituting the belt reinforcing layer is in a range of 0.4 to 0.95, the coefficient of final twist R being provided by following equation (I):

$$R = N \times (0.125 \times D/\rho)^{1/2} \times 10^{-3} \quad \cdots (I)$$

wherein N represents a number of twist of the cord (/10 cm), D represents a decitex value of an entire cord, and ρ represents density of the cord.

4. A pneumatic safety tire according to Claim 1, wherein the fiber cord constituting the carcass layer comprises a cord which comprises at least 50% by mass of a polyketone fiber and exhibits a maximum stress of thermal contraction in a range of 0.1 to 1.8 cN/dtex.

5. A pneumatic safety tire according to Claim 4, wherein a material fiber of the polyketone fiber in the fiber cord constituting the carcass layer has a tensile strength of 10 cN/dtex or greater, a modulus of 200 cN/dtex or greater and, after being treated with an adhesive (a dipping treatment), a degree of thermal contraction of 1 to 5% in a dry heat treatment at 150°C for 30 minutes.

6. A pneumatic safety tire according to any one of Claims 1 to 5, wherein the wound up end portions of at least one layer in the carcass layer are each disposed in a manner such that a portion of the wound up end portion overlaps an end portion of the belt layer.

7. A pneumatic safety tire according to Claim 6, wherein a width of the portion of the wound up end portion overlapping an end portion of the belt layer is 10 to 30 mm.

8. A pneumatic safety tire according to any one of Claims 1 to 7, wherein a polyketone constituting the polyketone fiber substantially comprises a repeating unit represented by following general formula (II):

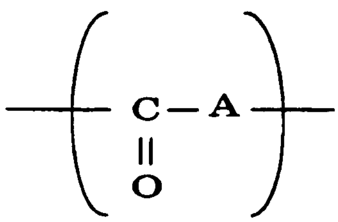

··· (II)

wherein A represents a portion derived from an unsaturated compound polymerized at an unsaturated bond, which may be same with or different from each other among repeating units.

9. A pneumatic safety tire according to Claim 8, wherein A in general formula (II) represents ethylene group.

**Patentansprüche**

1. Sicherheitsluftreifen (1), der Folgendes umfasst: Seitenwände (3), die mit den beiden Endabschnitten eines zylindrischen Scheitelabschnitts (4) in einer radial inneren Richtung verbunden sind und Spitzenabschnitte haben, die jeweils einen in dieselben eingebetteten Wulstkern (5) haben, eine Karkassenschicht (6), die wenigstens eine Bahn einer radialen Lage eines Faserkords in einem Abschnitt, der sich von einer der Seitenwände bis zu einer anderen der Seitenwände durch den Scheitelabschnitt erstreckt, und Endabschnitte, die jeweils in einer axial äußeren Richtung um den Wulstkern aufgewickelt und befestigt sind, umfasst, mehrere Gürtelschichten (8), Gürtelverstärkungsschichten (9, 10) und einen Laufflächenabschnitt (4), die zur Verstärkung aufeinanderfolgend an einem Außenumfang des Scheitelabschnitts der Karkassenschicht angeordnet sind, und verstärkende Gummischichten (7) mit einer annähernd halbmondförmigen Querschnittsform, die auf einer Innenumfangsfläche der Karkassenschichten an den Seitenwänden angeordnet sind und einen Teil einer Last tragen, **dadurch gekennzeichnet, dass** ein Faserkord, der die Gürtelverstärkungsschicht (9, 10) ausmacht, als ein ganzer Kord eine Größe von 1 000 bis 7 000 dtex hat, wenigstens 50 Massen-% einer Polyketon-Faser umfasst und eine maximale Beanspruchung durch thermische Kontraktion von 0,1 bis 1,8 cN/dtex zeigt.

**2.** Sicherheitsluftreifen nach Anspruch 1, wobei eine Materialfaser der Polyketon-Faser in dem Faserkord, der die Gürtelverstärkungsschicht ausmacht, eine Zugfestigkeit von 10 cN/dtex oder mehr, einen Modul von 200 cN/dtex oder mehr und, nachdem sie mit einem Klebstoff behandelt wird (eine Tauchbehandlung), bei einer trockenen Wärmebehandlung bei 150°C für 30 Minuten einen Grad der thermischen Kontraktion von 1 bis 5 % hat.

**3.** Sicherheitsluftreifen nach einem der Ansprüche 1 und 2, wobei ein Koeffizient der endgültigen Drehung R des Faserkords, der die Gürtelverstärkungsschicht ausmacht, in einem Bereich von 0,4 bis 0,95 liegt, wobei der Koeffizient der endgültigen Drehung R bereitgestellt wird durch die folgende Gleichung (I):

$$R = N \times (0{,}125 \times D / \rho)^{1/2} \times 10^{-3} \qquad \ldots \text{(I)},$$

wobei N eine Verdrehungszahl des Kords((/10 cm) darstellt, D einen Dezitex-Wert eines gesamten Kords darstellt und ρ eine Dichte des Kords darstellt.

**4.** Sicherheitsluftreifen nach Anspruch 1, wobei der Faserkord, der die Karkassenschicht ausmacht, einen Kord umfasst, der wenigstens 50 Massen-% einer Polyketon-Faser umfasst und eine maximale Beanspruchung durch thermische Kontraktion von 0,1 bis 1,8 cN/dtex zeigt.

**5.** Sicherheitsluftreifen nach Anspruch 4, wobei eine Materialfaser der Polyketon-Faser in dem Faserkord, der die Karkassenschicht ausmacht, eine Zugfestigkeit von 10 cN/dtex oder mehr, einen Modul von 200 cN/dtex oder mehr und, nachdem sie mit einem Klebstoff behandelt wird (eine Tauchbehandlung), bei einer trockenen Wärmebehandlung bei 150°C für 30 Minuten einen Grad der thermischen Kontraktion von 1 bis 5 % hat.

**6.** Sicherheitsluftreifen nach einem der Ansprüche 1 bis 5, wobei die aufgewickelten Endabschnitte wenigstens einer Schicht in der Karkassenschicht jeweils in einer solchen Weise angeordnet sind, dass ein Abschnitt des aufgewikkelten Endabschnitts einen Endabschnitt der Gürtelschicht überlappt.

**7.** Sicherheitsluftreifen nach Anspruch 6, wobei eine Breite des Abschnitts des aufgewickelten Endabschnitts, der einen Endabschnitt der Gürtelschicht überlappt, 10 bis 30 mm beträgt.

**8.** Sicherheitsluftreifen nach einem der Ansprüche 1 bis 7, wobei ein Polyketon, das die Polyketon-Faser ausmacht, im Wesentlichen eine sich wiederholende Einheit umfasst, die dargestellt wird durch die folgende allgemeine Formel (II):

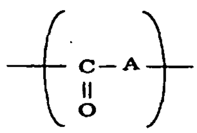

… (II),

wobei A einen von einer ungesättigten Verbindung abgeleiteten Abschnitt darstellt, der an einer ungesättigten Bindung polymerisiert wird, die unter den sich wiederholenden Einheiten einander gleich oder unterschiedlich sein kann.

**9.** Sicherheitsluftreifen nach Anspruch 8, wobei A in der allgemeinen Formel (II) eine Ethylengruppe darstellt.

## Revendications

1. Bandage pneumatique de sécurité (1), comprenant des flancs (3) connectés aux deux parties d'extrémité d'une partie de sommet cylindrique (4), dans une direction allant radialement vers l'intérieur, et comportant des parties de pointe comportant chacune une tringle (5) qui y est noyée, une couche de carcasse (6), comprenant au moins une feuille d'une nappe radiale de câblés de fibres dans une partie s'étendant de l'un des flancs vers l'autre flanc à travers la partie de sommet, et des parties d'extrémités, enroulées chacune autour de la tringle dans une direction allant radialement vers l'extérieur, et fixes, plusieurs couches de ceinture (8), des couches de renforcement de la ceinture (9, 10), et une partie de bande de roulement (4), agencées successivement au niveau d'une circonférence externe de la partie de sommet de la couche de carcasse pour assurer un renforcement, et des couches de gomme de renforcement (7), ayant une forme de section pratiquement en croissant, agencées sur une face circonférentielle interne des couches de carcasse au niveau des flancs, et supportant une partie d'une charge, **caractérisé en ce qu'**un câblé de fibres constituant la couche de renforcement de la ceinture (9, 10) a une taille comprise entre 1.000 et 7.000 dtex en tant que câblé entier, comprenant au moins 50% en masse d'une fibre de polycétone et présentant une contrainte maximale à contraction thermique comprise entre 0,1 et 1,8 cN/dtex.

2. Bandage pneumatique de sécurité selon la revendication 1, dans lequel une fibre de matériau de la fibre de polycétone dans le câblé de fibres constituant la couche de renforcement de la ceinture présente une résistance à la traction de 10 cN/dtex ou plus, un module de 200 cN/dtex ou plus, et après traitement avec un adhésif (un traitement par immersion), un degré de contraction thermique compris entre 1 et 5% dans un traitement à la chaleur sèche à 150° pendant 30 minutes.

3. Bandage pneumatique de sécurité selon l'une quelconque des revendications 1 et 2, dans lequel un coefficient de torsion finale R du câblé de fibres constituant la couche de renforcement de la ceinture est compris dans un intervalle allant de 9,4 à 0,95, le coefficient de torsion finale R étant établi par l'équation ci-dessous (I) :

$$R = N \times (0{,}125 \times D/\rho)^{1/2} \times 10^{-3} \qquad \ldots(I)$$

où N représente un nombre de torsions du câblé (/10 cm), D représentant une valeur décitex d'un câblé entier et p représentant la densité du câblé.

4. Bandage pneumatique de sécurité selon la revendication 1, dans lequel le câblé de fibres constituant la couche de carcasse comprend un câblé comprenant au moins 50% en poids d'une fibre de polycétone et présentant une contrainte maximale à contraction thermique comprise dans un intervalle allant de 0,1 à 1,8 cN/dtex.

5. Bandage pneumatique de sécurité selon la revendication 4, dans lequel une fibre de matériau de la fibre de polycétone dans le câblé de fibres constituant la couche de carcasse présente une résistance à la traction de 10 cN/dtex ou plus, un module de 200 cN/dtex ou plus, et, après un traitement par un adhésif (traitement par immersion), un degré de contraction thermique compris entre 1 et 5% dans un traitement à la chaleur sèche à 150°C pendant 30 minutes.

6. Bandage pneumatique de sécurité selon l'une quelconque des revendications 1 à 5, dans lequel les parties d'extrémité enroulées d'au moins une couche dans la couche de carcasse sont agencées chacune de sorte qu'une partie de la partie d'extrémité enroulée chevauche une partie d'extrémité de la couche de ceinture.

7. Bandage pneumatique de sécurité selon la revendication 6, dans lequel une largeur de la partie de la partie d'extrémité enroulée chevauchant une partie d'extrémité de la couche de ceinture est comprise entre 10 et 30 mm.

8. Bandage pneumatique de sécurité selon l'une quelconque des revendications 1 à 7, dans lequel un polycétone constituant la fibre de polycétone comprend pour l'essentiel une unité récurrente représentée par la formule générale ci-dessous (II) :

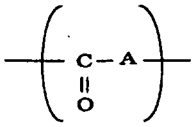

…..(II)

où A représente une partie dérivée d'un composé non saturé polymérisé au niveau d'une liaison non saturée, pouvant être identique ou différente parmi les unités récurrentes.

**9.** Bandage pneumatique de sécurité selon la revendication 8, dans lequel la lettre A dans la formule générale (II) représente un groupe éthylène.

Fig. 1

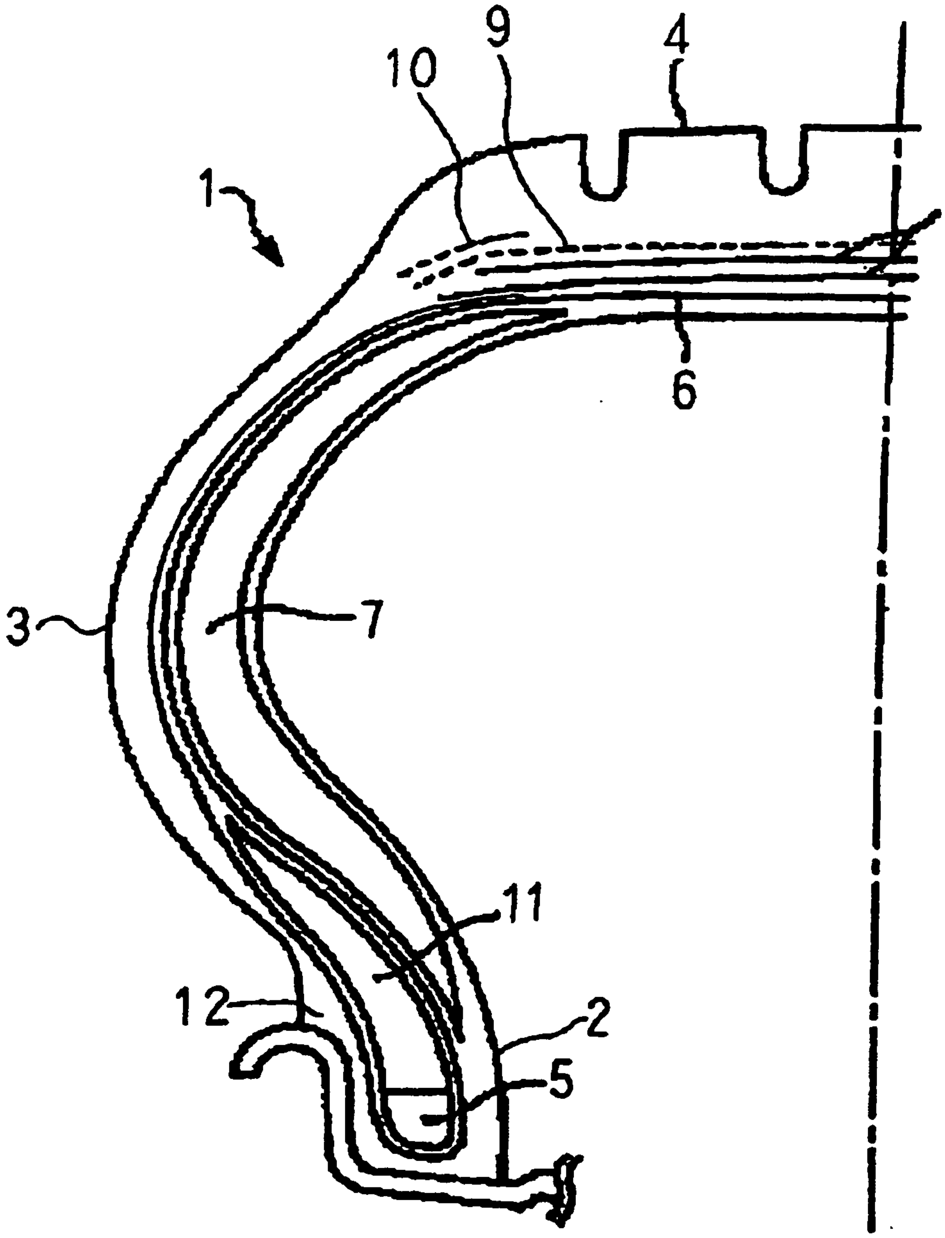

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEISEI61994191243 B
- JP 2004359145 A
- JP 3335112 B
- JP HEISEI21990112413 B
- JP HEISEI41992228613 B
- JP 11018143 A
- JP 0009611 A
- JP 2001164422 A
- JP 2004218189 A
- JP 2004285221 A